# EUROPÄISCHE PATENTSCHRIFT

(11) **EP 1 703 796 B1**
(45) Veröffentlichungstag und Bekanntmachung des Hinweises auf die Patenterteilung: **30.07.2014**
(21) Anmeldenummer: 05701472.2
(22) Anmeldetag: 10.01.2005
(51) Int. Cl.: A21C 3/08

(54) **TEIGSTRANG-SCHLINGSYSTEM**
KNOTTING SYSTEM FOR A DOUGH STRAND
SYSTEME D'ENROULEMENT DE TRON ON DE PATE

(30) Priorität: 12.01.2004 DE 102004001792
(43) Veröffentlichungstag der Anmeldung: 27.09.2006
(60) Teilanmeldung: 11152235.5
(73) Patentinhaber: Fritsch GmbH, 97348 Markt Einersheim (DE)
(72) Erfinder: BERNHARDT, Udo, 97346 Iphofen (DE)
(74) Vertreter: Götz, Georg Alois
(86) Internationale Anmeldenummer: PCT/EP2005/050078
(87) Internationale Veröffentlichungsnummer: WO 2005/065458

(56) Entgegenhaltungen:
- EP-A- 0 499 964
- EP-A- 0 938 844
- EP-A- 1 255 441
- DE-A1- 1 782 289
- DE-A1- 4 430 172
- DE-A1- 19 649 839
- DE-A1- 19 721 062
- DE-U1- 20 007 872
- DE-U1- 20 309 072

## Beschreibung

Die Erfindung betrifft ein Verfahren und eine Vorrichtung zur maschinellen Herstellung von geschlungenen Teigwaren, insbesondere Brezeln, aus Teigsträngen.

Die automatisierte Herstellung von geschlungenen Teigwaren, insbesondere von Brezeln, ist eine große technische Herausforderung, da das Schlingen der Teigstränge fertigungstechnisch einen sehr komplexen Vorgang darstellt. Aus dem Stand der Technik sind verschiedene Ansätze für die automatisierte Brezelherstellung bekannt:

Die Patentschrift DE 3841395 C1 der Bäckerei Oswald Piller beschreibt ein Verfahren und eine Vorrichtung zur Herstellung von Brezeln. Als Ausgangsprodukt bei dem offenbarten Verfahren bzw. bei der offenbarten Vorrichtung dient ein gerader Teigstrang, der an seinen Teigstrangenden von Saugnäpfen ergriffen wird. In einem weiteren Schritt werden die Saugnäpfe mit den Teigstrangenden angehoben und in horizontaler Richtung derart verschoben, dass sich der Teigstrangmittelteil um einen feststehenden Anschlag legt. In weiteren Schritten werden die Teigstrangenden durch Rotieren der Saugnäpfe um eine gemeinsame Achse miteinander verschlungenen und auf dem Teigstrangmittelteil abgelegt.

Nachfolgende Anmeldungen der gleichen Anmelderin schlugen einen anderen Weg ein und ersetzten die horizontale Verfahrbewegung der Saugnäpfe bzw. anderer Greifereinrichtungen durch eine horizontale Verfahrbewegung des Anschlags, um den sich der Teigstrangmittelteil legt. Es wird in diesem Zusammenhang auf die Druckschriften der DE 4336329 C1, DE 4441301 C1 oder auch DE 19511409 C1 verwiesen.

Die Druckschrift EP 1255441 B1 der Anmelderin der vorliegenden Patentanmeldung beschreibt ebenfalls ein Verfahren und eine Vorrichtung zur Herstellung von Brezeln. Bei dem offenbarten Fertigungsverfahren wird ein U-förmig gebogener Teigstrang mittels Förderbänder über einen Formtisch bewegt. Durch den Formtisch greifen halbkreisförmig angeordnete Haltestifte, die zusammen mit dem Formtisch einen Anschlag für den Teigstrangmittelteil bilden. Der Teigstrang wird in einem ersten Schritt mittels der Förderbänder gegen den Anschlag gefahren und die Teigstrangenden werden am Ende des Formtisches durch Greifereinrichtungen gefasst. In einem zweiten Schritt wird der Teigstrang um ein definiertes Dehnungsmaß gedehnt, indem der Anschlag, insbesondere die Haltestifte, entgegen der ursprünglichen Förderrichtung des Teigstrangs verschobenen werden, wobei die die Teigstrangenden haltende Greifereinrichtungen stationär verbleiben. In weiteren Schritten werden die Greifereinrichtungen in eine Schlingposition zum Verschlingen der Teigstrangenden und danach in eine Ablageposition zur Ablage der Teigstrangenden auf dem Teigstrangmittelteil gefahren.

Der Erfindung liegt die Aufgabe zu Grunde, ein Verfahren sowie eine Vorrichtung der eingangs genannten Art zu schaffen, welche eine konstruktiv vereinfachte, kostengünstige maschinelle Herstellung von geschlungenen Teigwaren mit einer verminderten Anzahl an Antriebskomponenten erlauben.

Die Aufgabe wird gelöst durch das im Anspruch 1 angegebene Herstellungsverfahren und die im Anspruch 9 angegebene Vorrichtung zur Durchführung des Verfahrens. Optionale oder vorteilhafte Ausgestaltungen oder Abänderungen ergeben sich ganz oder teilweise aus den abhängigen Ansprüchen und/oder der nachfolgenden Beschreibung.

Eine Vorrichtung auf der Basis der Erfindung dient zur maschinellen Herstellung von geschlungenen Teigwaren, insbesondere Brezeln. Geschlungene Teigwaren umfassen auch Zöpfe, Laugenknoten oder andere Teigwaren, die einen geschlungenen Abschnitt, insbesondere einen geschlungenen Mittelabschnitt aufweisen. Der geschlungene Abschnitt kann hierbei eine einfache Schlingung, das heißt ein Verzwirbeln von Teigsträngen um 360 Grad, oder eine mehrfache Schlingung aufweisen.

Die Vorrichtung weist einen Formtisch auf, der eine horizontale Auflagefläche für einen zweckmäßig U-förmig gebogenen Teigstrang zur Verfügung stellt. Vorzugsweise werden die Teigstränge auf dem Formtisch mittels Förderbänder oder -riemen in eine Förderrichtung bewegt. Ferner weist die Vorrichtung ein aktivierbares, also zuschaltbares, Formwerkzeug auf, welches im zugeschalteten Zustand eine vertikale Anlage für den U-förmig gebogenen Teigstrang, insbesondere für den Mittelteil des U-förmig gebogenen Teigstrangs, bildet. Der Anlagebereich des Formwerkzeugs ist in Draufsicht zumindest abschnittsweise kreisförmig oder hufeisenförmig zur Aufnahme des in Draufsicht halbkreisförmigen Teigstrangmittelteils des U-förmig gebogenen Teigstrangs ausgebildet.

Formtisch und aktiviertes Formwerkzeug bilden einen gemeinsamen Formanschlag für den U-förmig gebogenen Teigstrang, wobei der Teigstrang auf dem Formtisch aufliegt und an dem Formwerkzeug anliegt.

Weiterhin weist die Vorrichtung einen Schlingkopf auf, der zum Ergreifen der Teigstrangenden und zum Schlingen des Teigstrangs drehbar, vorzugsweise durch Rotation um eine Drehachse, ausgebildet ist (siehe auch EP 1 255441 B1).

Die Vorrichtung ist ferner so ausgestaltet, dass der Schlingkopf von einer Greifposition, in der die Teigstrangenden des U-förmig gebogenen Teigstrangs ergriffen werden, zu einer Dehnungsposition, in der der Teigstrang gedehnt wird, zu einer Schlingposition, in der der Teigstrang verschlungen wird, zu einer Ablageposition, in der die Teigstrangenden auf dem Teigstrangmittelteil abgelegt werden, verfahrbar ist. Der Schlingkopf fährt von der Greifposition zunächst in Förderrichtung des Teigstrangs zu der Dehnungsposition und dann gegen die Förderrichtung des Teigstrangs zur Schlingposition und abschließend zur Ablageposition.

Der durch Formtisch und Formwerkzeugs gebildete gemeinsame Formanschlag ist stationär ausgebildet, nämlich parallel zu einer Bodenebene beziehungsweise gegenüber der Förderrichtung nicht verfahrbar.

Bei bevorzugten Ausführungsformen der Vorrichtung kann eine Zuführeinrichtung vorgesehen sein, die konstruktiv zur Formung und/oder Zuführung von U-förmig gebogenen Teigsträngen zu dem Formtisch ausgebildet ist. Insbesondere kann die Zuführeinrichtung ausgebildet sein, wie sie in der EP 0 938 844 B1 beschrieben ist. Auf die Offenbarung dieser Druckschrift wird vollumfänglich Bezug genommen. Die Zuführeinrichtung ist vorzugsweise derart ausgebildet, dass die Teigstränge geformt und/oder ausgerichtet zugeführt werden, so dass die Teigstrangenden parallel zur Zuführrichtung und/oder Förderrichtung des Formtisches ausgerichtet sind, insbesondere kann vorgesehen sein, dass die Teigstrangschenkel gleichlang sind und/oder in Zuführrichtung und/oder Förderrichtung ausgerichtet sind.

Bei einer bevorzugten Weiterbildung der Vorrichtung weist der Formtisch ein oder mehrere parallele Förderriemen auf, die die horizontaler Auflage für den U-förmig gebogenen Teigstrang bilden (siehe auch EP 1 255 441 B1).

Das Formwerkzeug kann beispielsweise Stifte und/oder Haltekörper aufweisen, die hufeisenförmig und/oder halbkreisförmig angeordnet sind, und im aktivierten Zustand des Formwerkzeugs den Anlagebereich für den Mittelteil des U-förmigen Teigstrangs bilden. Insbesondere kann vorgesehen sein, dass die Stifte und/oder Haltekörper durch die Förderbänder hindurchgreifen oder zwischen diesen angeordnet sind (siehe auch EP 1 255 441 B1).

Bei einer bevorzugten Ausführungsform ist das Formwerkzeug, insbesondere die Stifte und/oder die Haltekörper, ausschließlich in Richtung zum Boden und umgekehrt verfahrbar. Durch das entsprechende Verfahren in meist vertikaler Richtung kann das Formwerkzeug zu- bzw. abgeschaltet werden, also aktiviert beziehungsweise deaktiviert werden: In dem deaktivierten Zustand ist das Formwerkzeug in dem Formtisch und/oder unterhalb des Formtischs versenkt angeordnet, insbesondere ragen die Endabschnitte des Formwerkzeugs in vertikaler Erstreckung nicht über die durch den Formtisch gebildete Auflagefläche hinaus. In dem aktivierten Zustand wirken das Formwerkzeug und der Formtisch derart zusammen, dass ein gemeinsamer Formanschlag für den U-förmig gebogenen Teigstrang gebildet wird. Insbesondere greift das Formwerkzeug, im speziellen die Stifte und/oder die Haltekörper, durch die Förderbänder hindurch, um den gemeinsamen Anschlag zu bilden.

Bei einer bevorzugten Ausführungsform umfasst der Schlingkopf mindestens zwei Greifeinrichtungen zum Greifen der Teigstrangenden. Insbesondere kann vorgesehen sein, dass jede der Greifeinrichtungen auf einem ihr zugeordneten Schwenkantrieb exzentrisch angeordnet ist, welcher eine Schwenkbewegung der Greifeinrichtung in einer horizontalen beziehungsweise bodenparallelen Ebene ermöglicht (siehe auch EP 1 255 441 B1).

Vorzugsweise kann der Schlingkopf mittels eines Drehantriebs um eine vertikal verlaufende Drehachse gedreht werden, die symmetrisch zwischen den Greifeinrichtungen angeordnet ist. Insbesondere ist diese Drehachse parallel zu den Schwenkachsen der Schwenkantriebe angeordnet (siehe auch EP 1 255 441 B1). Bei alternativen Ausführungsformen kann die Drehachse auch geneigt angeordnet sein, insbesondere um die Position und die Ausbildung des Schlingenbereichs der Teigware zu beeinflussen.

Bei einer bevorzugten Ausführungsformen der Vorrichtung ist der Drehantrieb als Endlos-Drehachse und/oder als Servo- oder Schrittmotor ausgebildet. Eine derartige Ausbildung erlaubt vorzugsweise programmgesteuert eine Drehung des Schlingkopfs um eine, zwei und/oder um mehrere Umdrehungen. Diese Ausführungsform erlaubt die Herstellung von Teigwaren mit mehrfach geschlungenen Mittelteilen, wie z.B. Zöpfen oder Laugenknoten.

Bei einer bevorzugten Weiterbildung der Vorrichtung ist eine Drehdurchführung an dem Drehantrieb vorgesehen, durch den Steuersignale und/oder Versorgungssignale für den Schlingkopf geführt sind, so dass eine Endlos-Drehung ermöglicht wird. Mit einer derartigen Drehdurchführung wird erreicht, dass Drehungen des Schlingkopfs nicht rückgängig gemacht werden müssen, um die ansonsten benötigten Signal- und Versorgungsleitungen zu entwirren.

Zur Bewegung des Schlingkopfs kann ferner ein Linearantrieb vorgesehen sein, der eine Verschiebung in vertikaler Richtung, vorzugsweise senkrecht zur Oberseite des Formtisches und/oder parallel zur Drehachse des Drehantriebs ermöglicht. Bei einfachen Ausführungen kann dieser Linearantrieb als mindestens zwei in Serie geschaltete Hubzylinder ausgebildet sein, so dass der Schlingkopf mindestens drei verschiedene Vertikalpositionen einnehmen kann. Alternativ kann der Linearantrieb auch als programmgesteuerter Stellantrieb ausgebildet sein, so dass die vertikale Position des Schlingkopfs stufenlos einstellbar ist.

Die Vorrichtung kann ferner eine Linearachse zur Verschiebung des Schlingkopfs in horizontaler Richtung, vorzugsweise parallel zur Förderrichtung der Förderbänder, aufweisen. Der Schlingkopf ist mittels dieser Linearachse in horizontaler Ebene zwischen Greifposition, Dehnungsposition, Schlingposition und Ablageposition verfahrbar.

Bei einer bevorzugten Ausführungsform bilden die Linearachse, der vorzugsweise senkrecht dazu angeordnete und insgesamt insbesondere vertikal ausgerichtete Linearantrieb und der vorzugsweise mit seiner Drehachse parallel zum Linearantrieb angeordnete Drehantrieb eine kinematische Kette. Alternativ kann diese kinematische Kette auch durch ein anderes Führungssystem, insbesondere einen Knickarm-Roboter, bereitgestellt werden.

Bei einer praktischen Weiterbildung der Vorrichtung sind Sensoren zur Erkennung der Teigstrangenden vorgesehen. Vorzugsweise sind die Sensoren derart ausgebildet und/oder angeordnet, dass Teigstrangenden von vorzugsweise U-förmig gebogenen Teigstränge erfassbar sind. Insbesondere können zwei Sensoren vorgesehen sein, wobei für jeden der zwei Sensoren jeweils ein Teigstrangende unabhängig vom anderen Sensor erfassbar ist.

Bei einer vorteilhaften Weiterbildung ist die Greifposition der Greifeinrichtungen in Förderrichtung der Messposition der Sensoren nachgeschaltet. Mit anderen Worten, die Sensoren sind derart angeordnet, dass die auf dem Formtisch aufliegenden Teigstrangenden des U-förmigen Teigstrangs durch die Sensoren bereits beim Einlaufen in die Greifeinrichtung erfassbar sind.

Bei einer bevorzugten Ausgestaltung der Vorrichtung sind zwei Sensoren seitlich am Formtisch gegenüberliegend in gleicher Höhe angeordnet, wobei die zwei Sensoren eine Messlinie und/oder eine Messebene bilden, die senkrecht zur Förderrichtung und/oder zumindest teilweise oberhalb des Formtischs angeordnet ist. Vorzugsweise sind die Sensoren in Förderrichtung in der hinteren Hälfte oder im hinteren Endabschnitt des Formtischs angeordnet, beispielsweise oberhalb der hinteren Umlenkrolle der Förderbänder. Vorteilhafterweise ist die Position der Sensoren so gewählt, dass die Teigstrangenden unmittelbar vor dem Ende des Förderbandes oder innerhalb der zweiten Hälfte des Formtisches detektiert werden.

Zum Abtransport der verschlungenen Teigwaren kann dem Formtisch eine Abführeinrichtung nachgeschaltet sein, wobei zwischen Formtisch und Abführeinrichtung ein Spalt oder Zwischenbereich vorgesehen ist, in den die Greifeinrichtungen des Schlingkopfs in Greifposition zumindest abschnittsweise eingreifen. Durch diese konstruktive Ausgestaltung ist es möglich, dass die Greifeinrichtungen die über das Formtischende überstehende Teigstrangenden in einer Ebene greifen kann, die durch das auf dem Formtisch auf liegende Teigstrangmittelteil gebildet wird. Dadurch ist ein besonders zuverlässiges Greifen gewährleistet.

Bei einer vorteilhaften Ausgestaltung der Vorrichtung ist eine Steuerung vorgesehen, mit der ein Dehnungsmaß d einstellbar ist, um welches der Teigstrang gedehnt wird. Das Dehnungsmaß kann den Differenzwert beschreiben, um den der Teigstrang gedehnt wird. Das Dehnungsmaß kann aber auch den absoluten Wert beschreiben, auf den der Teigstrang gedehnt wird. Vorzugsweise ist das Differenzdehnungsmaß in einem Bereich zwischen 10 mm bis 150 mm oder in einem Bereich zwischen 50 mm und 120 mm einstellbar.

Bei einer vorteilhaften Weiterbildung umfasst die Steuerung ein Datenbanksystem, in dem verfahrensspezifische Parameter und/oder produktspezifische Parameter abgelegt sind, wobei vorzugsweise die verfahrensspezifische Parameter mit den produktspezifischen Parametern verknüpft sind. Die verfahrensspezifische Parameter können dabei zum Beispiel die Anzahl der Drehungen der Drehachse und/oder das absolute Dehnungsmaß und/oder das Differenzdehnungsmaß und/oder die Ortskoordinaten für der Stellbewegung des Schlingkopfs umfassen. Die produktspezifischen Parametern umfassen beispielsweise die Art der Teigware und/oder Kenngrößen des Teigmaterials. Vorzugsweise sind die produktspezifischen und die verfahrensspezifischen Parameter über einen Teigwarendatenschlüssel verknüpft und die Steuerung programmtechnisch ausgebildet, so dass nach Eingabe des Teigwarendatenschlüssels automatisch die zugehörigen Produkt- und verfahrensspezifischen Parameter in die Steuerung geladen werden.

Das erfindungsgemäßen Verfahren wird zweckmäßig mit der beschriebenen Vorrichtung oder mit einer Vorrichtung gemäß einer der Ansprüche und/oder mit einer Vorrichtung mit einem oder mehreren Merkmalen der Ansprüche durchgeführt.

In einem ersten Schritt des erfindungsgemäßen Verfahrens werden die Teigstrangenden eines vorzugsweise U-förmig gebogenen Teigstrangs von einem Schlingkopf, der sich in einer Greifposition befindet, aufgenommen. Vorzugsweise - insbesondere um die Taktzeiten möglichst gering zu halten - wird der Teigstrang zu der Position, in der er aufgenommen wird, bereits U-förmig gebogen zugeführt.

In einem zweiten Schritt wird der gebogene Teigstrang um einen definiertes Dehnungsmaß gedehnt. Bei dieser Dehnung wird der Mittelteil des Teigstrangs durch einen stationären Anschlag festgehalten und die Dehnung erfolgt durch ein Verschieben oder Verfahren des Schlingkopfs vorzugsweise in Förderrichtung des Formtischs.

In einem dritten Schritt wird der Schlingkopf in eine Schlingposition verfahren, in der der Teigstrang verschlungen wird, also die Teigstrangenden miteinander verzwirbelt werden. Vorzugsweise ist vorgesehen, dass die bei der Dehnung entstandene Spannung in dem Teigstrang zumindest bis zur Hälfte des Schlingvorgangs vorzugsweise konstant gehalten wird. Die Aufrechterhaltung der Spannung führt dazu, dass der verschlungene Bereich, insbesondere der Brezelknoten, so fest geschlungenen ist, dass während eines möglichen nachfolgenden Laugenvorgangs keine oder verhältnismäßig wenig Lauge in den verschlungenen Bereich eindringen kann. Mit ganz besonderem Vorteil werden Schlingführungselemente zugeschaltet, die während des Schlingvorgangs oder zumindest in der ersten Hälfte des Schlingvorgangs die Teigstrangschenkel vorzugsweise vollständig umfassen und/oder führen.

In einem vierten Schritt wird der Schlingkopf in eine Ablageposition verfahren, in der die Teigstrangenden auf dem Teigstrangmittelteil abgelegt werden. Vorzugsweise werden die Teigstrangenden nicht nur abgelegt, sondern auf dem Teigstrangmittelteil ausgedrückt.

Bei einer bevorzugten Ausführungsform des Verfahrens werden die vorzugsweise U-förmig gebogenen Teigstränge mittels einer Zuführeinrichtung zugeführt und/oder mit einer Fördereinrichtung weitergeführt, wobei die Teigstrangenden in Zuführrichtung und/oder Förderrichtung ausgerichtet sind. Die vorauslaufenden Teigstrangenden werden durch Sensoren und/oder Sensoreinrichtungen detektiert, wobei die Teigstrangenden sich in der gleichen Ebene wie das Teigstrangmittelteil befinden, insbesondere auf der gleichen Ebene aufliegen.

Vorzugsweise werden nach der Detektion die detektierten Teigstrangenden mit Greifeinrichtungen ergriffen. Diese Greifeinrichtungen sind in der Förderrichtung den Sensoren nachgeschaltet. Insbesondere werden die Teigstrangenden ergriffen, sobald sie über eine Endkante der Fördereinrichtung herausragen und im speziellen derart, dass die Teigstrangenden nicht oder nur unwesentlich nach unten aufgrund der Schwerkraft abknicken, sondern sich immer noch in einer Ebene mit dem Teigstrangmittelteil befinden und/oder die Unterseite der Teigstrangenden in einer Ebene mit der Unterseite des Teigstrangmittelteils liegt.

Vorteilhafterweise wird die während der Dehnung aufgebaute Spannung in dem Teigstrang bis in den Schlingschritt aufrechterhalten, insbesondere um die Bildung eines fest geschlungenen Knotens zu unterstützen. Die Spannung wird vorzugsweise mindestens bis zu einer 3/4 Drehung des Schlingkopfes aufrecht erhalten. Weiterhin können mit ganz besonderem Vorteil Schlingführungselemente vorgesehen sein, die während des Schlingvorgangs die Teigstrangschenkel vorzugsweise vollständig umfassen oder umgreifen und die Aufrechterhaltung der Spannung und die gezielte Positionierung des Knotens unterstützen. Dies wirkt sich auch positiv auf die Formstabilität der fertig geschlungenen Brezel aus.

Zweckmäßig wird zur Einnahme der Dehnungsposition dem Schlingkopf eine Entfemungsbewegung erteilt, wobei der Abstand vom stationären Anschlag erhöht wird. Mit besonderem Vorteil wird dabei dem sich entfernenden Schlingkopf eine Bewegungskomponente quer zur Teigstrang-Förderrichtung erteilt, woraus eine gegenüber der Teigstrang-Förderrichtung schräg nach oben beispielsweise verlaufende Bewegungsrichtung resultiert. Dadurch wird eine Reibung zwischen Förderbändern des Formtisches und dem Teigstrang vermieden.

Sowohl zum Erreichen der Schling- als auch der Ablageposition ist dann die Verfahrrichtung des Schlingkopfes zweckmäßig umzukehren, d. h. entgegen der Teigstrang-Förderrichtung auszurichten. Das Schlingen des Teigstrangs erfolgt zweckmäßig mit Abstand zur Auflagefläche des Formtisches, während zur Ablage der Schlingkopf weiter entgegen der Förderrichtung verfahren und gleichzeitig zum Teigstrang-Zwischenabschnitt abgesenkt wird (weitere Überlagerung einer Querbewegung).

Weitere Merkmale, Einzelheiten, Vorteile, Kombinationen und Wirkungen auf der Basis der Erfindung sind aus dem nachfolgenden Ausführungsbeispiel zu entnehmen. Es zeigen:
- Figur 1: eine Seitenansicht eines Ausführungsbeispiels einer Brezeischlingvorrichtung,
- Figur 2: eine Draufsicht auf den Formtisch 2 in Figur 1 mit Teilansicht des Schlingkopfs 9, gem. Schnittlinie A-A in Figur 5a, wobei die linke Greifeinrichtung in geschwenkter Position dargestellt ist,
- Figur 3: eine Seitenansicht des Formtischs 2 in Figur 1 mit schematisch dargestelltem Ablauf des Schlingkopfes 9 bezogen auf die Teigstrangenden 46a während des Schlingvorgangs,
- Figur 4: eine Draufsicht auf den Formtisch 2 in Figur 1 mit Teilansicht der Greiferfinger 40/41 und 42/43 der linken und rechten Greifeinrichtung 33/34, wobei zusätzlich ein einlaufender Teigstrang 46 in die Greifeinrichtung 33/34 dargestellt ist,
- Figur 4a: eine Draufsicht auf den Formtisch 2 in Figur 1 mit durch die Greiferfinger 40/41 und 42/43 gegriffenen Teigstrangenden 46a,
- Figur 5: eine Draufsicht auf den Formtisch 2 in Figur 1 mit Darstellung des abgeschlossenen Dehnvorgangs um das Dehnmaß d,
- Figur 5a: eine Seitenansicht der Vorrichtung gemäß Figur 5 mit Schnitt A-A,
- Figur 6: eine Draufsicht auf den Formtisch 2 in Figur 1 mit geschlossenen Knoten-, Schling- und Führungsteil 10 und 11, sowie mit geschwenkten Greifeinrichtungen 33 und 34, wobei der Teigstrang 46 eine Omegaform einnimmt,
- Figur 6a: eine Seitenansicht der Vorrichtung gem. Figur 6,
- Figur 7: eine Draufsicht auf den Formtisch 2 in Figur 1 mit ausgebildeten Brezelknoten und geöffneten Knoten-, Schling- und Führungsteil 10 und 11,
- Figur 7a: eine Seitenansicht der Vorrichtung in Figur 7, wobei abweichend von Figur 7 der Schlingkopf 9 um 90° gedreht dargestellt ist,
- Figur 8: eine Draufsicht auf den Formtisch 2 in Figur 1 mit fertig geschlungenen Brezelrohling 56,
- Figur 8a: eine Seitenansicht der Vorrichtung gemäß Figur 8 mit Darstellung der geöffneten Greiferfinger und ausgefahrenen Andrückstössel 54 zum Auflegen und Andrücken der Brezelstrangenden 46a auf den Brezelstrangmittelteil 46b,
- Figur 9: eine Draufansicht auf den Formtisch 2 in Figur 1 und den Zwischentisch 12 mit fertig geschlungenen Brezelrohling 56, sowie neu ankommenden U-förmig gebogenen Brezelstrang 46
- Figur 9a: eine Seitenansicht der Vorrichtung gemäß Figur 9.

Die Brezelherstellungsvorrichtung umfasst eine Zuführeinrichtung 1, mit der U-förmig gebogene Teigstränge vorbereitet und einem Formtisch 2 zugeführt werden, den Formtisch 2, auf dem unter Verwendung einer Schlingvorrichtung 8 die U-förmig gebogenen Teigstränge zu Brezeln verschlungen werden sowie einen Zwischentisch 12 und einen Abführtisch 13 zum Abtransport der geschlungenen Brezeln.

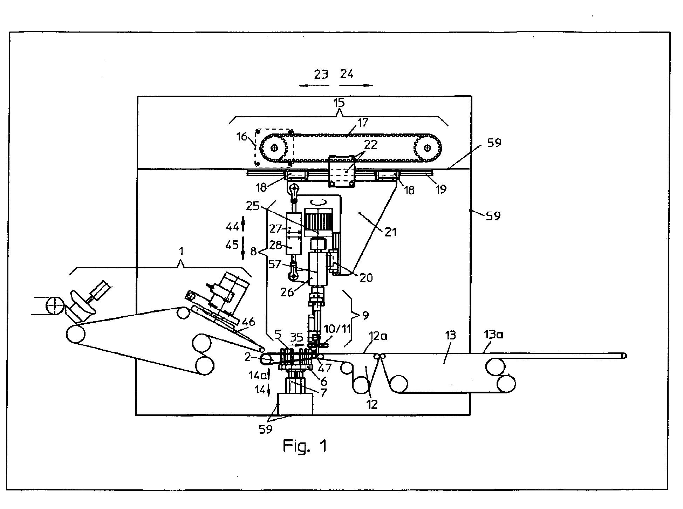

Der Verfahrensablauf zur Brezelherstellung ist kurz gefasst wie folgt: In die Zuführeinrichtung 1 wird ein gerader Teigstrang (nicht dargestellt) mittels eines weiteren Förderbandes eingegeben, wobei der Teigstrang waagrecht und in seiner Längserstreckung senkrecht zu der Zuführrichtung angeordnet ist. Die Zuführeinrichtung 1 formt den geraden Teigstrang in einen U-förmig gebogenen Teigstrang 46 um, dessen freie Teigstrangenden in Zuführrichtung ausgerichtet sind. Mit dieser Ausrichtung wird der U-förmig gebogene Teigstrang 46 dem Formtisch 2 übergeben, der ihn in einer Förderrichtung bis zu einer Bearbeitungsposition, in der der Teigstrang zu einer Brezel verschlungen wird, weitertransportiert. Die Zuführrichtung und die Förderrichtung sind bei der Brezelherstellungsvorrichtung in Figur 1 identisch und entsprechen der Transportrichtung 35. Die Bearbeitungsposition ist definiert durch einen Anschlag, der durch den Formtisch 2 als horizontale Auflage und durch den Formtisch 2 greifende Haltestifte 5 als vertikale Anlage, gebildet ist. In der Bearbeitungsposition ist das Teigstrangmittelteil in seiner Lage durch den genannten Anschlag in Förderrichtung formschlüssig gehalten. Die Teigstrangenden werden von einem Schlingkopf 9 der Schlingvorrichtung 8 ergriffen. Im weiteren Verlauf verfährt der Schlingkopf 9 erst in eine Dehnposition 49, um den Teigstrang auf eine festlegbare Länge zu dehnen, dann in eine Schlingposition 51, in der die Teigstrangschenkel miteinander verschlungen werden und letztlich in eine Ablageposition 52, um die Teigstrangenden auf dem Teigstrangmittelteil abzulegen. In einem letzten Schritt wird die hergestellte Brezel über den Zwischentisch 12 und den Abführtisch 13 abtransportiert.

Die Zuführeinrichtung 1 zur Vorbereitung der U-förmig gebogenen Teigstränge, insbesondere zum Biegen, Vermessen und Ausrichten der U-förmigen Teigstränge, ist aus dem Patent EP 0 938 844 B1 bekannt. Für konstruktive Einzelheiten der Zuführeinrichtung wird auf die Beschreibung des genannten Patents Bezug genommen.

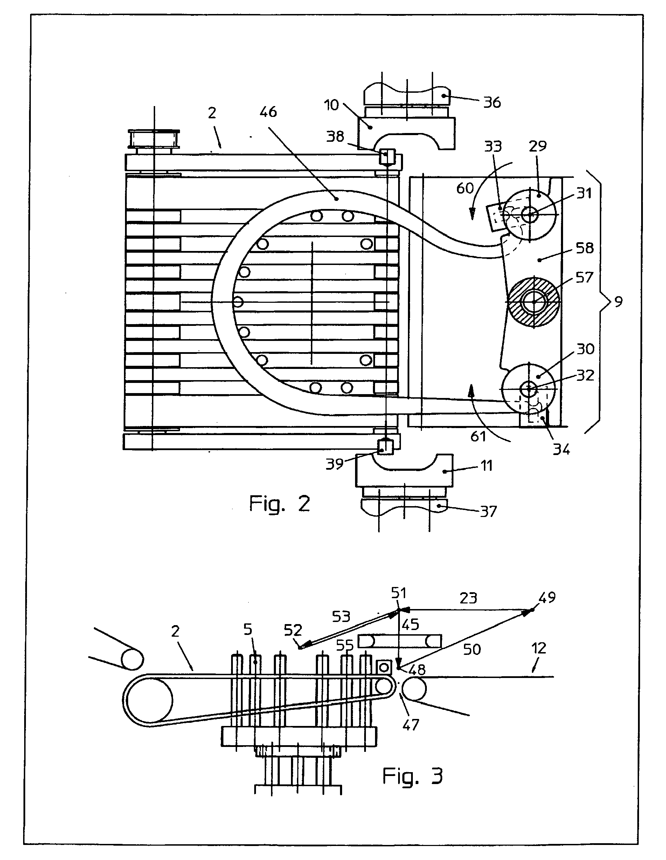

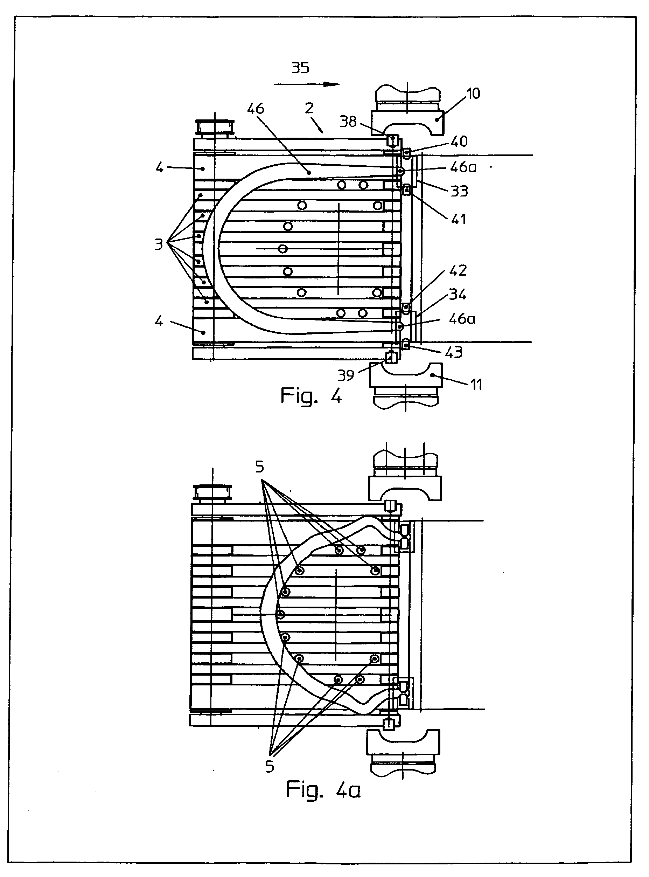

Von der Zuführeinrichtung 1 wird der U-förmig gebogene Teigstrang 46 mit den Teigstrangenden voraus an den Formtisch 2 übergeben, wobei die Teigstrangschenkel vorzugsweise gleichlang und parallel zueinander sowie zur Transportrichtung 35 ausgebildet sind. Der Formtisch 2 ist neben der Darstellung in der Figur 1 in vergrößerter Seitenansicht in den Figuren 3, 5a, 6a, 7a, 8a und 9a sowie in vergrößerter Draufsicht in den Figuren 4, 4a, 5, 6, 7 ,8 und 9 gezeigt.

Der Formtisch 2 ist als Förderband für den Antransport des U-förmig gebogenen Teigstrangs 46 zur Bearbeitungsstelle sowie zum Abtransport des geschlungenen Brezelrohlings 56 nach dem Schlingvorgang ausgebildet. Hierzu umfasst der Formtisch 2 zwei waagrecht und parallel zueinander angeordnete Umlenkrollen zur Umlenkung einer Mehrzahl von schmalen und breiten Förderriemen 3 und 4,die parallel zur Förderrichtung des Formtisches 2 angeordnet sind und zur Auflage und zum Transport des U-förmig gebogenen Teigstrangs bzw. der fertigen Brezel dienen. Die schmalen und breiten Förderriemen 3 und 4 sind parallel zueinander angeordnet, wobei zwischen den Förderriemen jeweils ein Spalt vorgesehen sind. Die schmalen Förderriemen 3 befinden sich in einem mittleren Bereich des Formtisches 2, der von zwei breiten Förderriemen 4 im Randbereich begrenzt ist. Wie z.B. aus den Figuren 4 und 4a ersichtlich ist, ist der Bereich der schmalen Förderriemen 3 senkrecht zur Förderrichtung so breit ausgeführt, dass das Teigstrangstrangmittelteil des U-förmig gebogenen Teigstrangs 46 aufgelegt werden kann, während die Teigstrangschenkel auf den breiten Förderriemen 4 aufliegen.

Der U-förmig gebogene Teigstrang 46 wird durch die Förderriemen 3 und 4 solange in Transportrichtung 35 verfahren, bis der Teigstrangmittelteil an eine Anlage anschlägt, die durch eine Mehrzahl von vertikal ausgerichteten und in Draufsicht halbkreisartigen angeordneten Haltestiften 5 gebildet wird. Die Haltestifte 5 sind Teil eines Brezelformwerkzeugs 6 und sind in den Spalten zwischen den Förderbändern 3 und 4 angeordnet, so dass sie den Formtisch 2 durchgreifen. Das Unterteil des Brezelformwerkzeugs 6 ist auf einem Hubzylinder 7 mit in der Regel vertikaler Hubrichtung angeordnet, der sich unterhalb des Formtisches 2 befindet. Der Hubzylinder 7 ist an einem feststehenden Grundgestell 59 befestigt ist, so dass dem gegenüber das Brezelformwerkzeug 6 in vertikaler Richtung 14 verschiebbar ist. Mit Hilfe des Hubzylinders 7 kann somit das Brezelformwerkzeug 6 in vertikaler Richtung 14 zwischen zwei Positionen bewegt werden. In der ersten, oberen Position ist der Hubzylinder 7 ausgefahren, so dass die Haltestifte 5 über die Oberseite der Förderriemen 3 und 4 herausragen und einen Anschlag für den Teigstrang 46 bilden. In dieser Position ist das Brezelformwerkzeug 6 zugeschaltet, wie es in den Figuren 3, 4a, 6a, 8a und 9a gezeigt ist. In der zweiten, unteren Position ist der Hubzylinder 7 ist eingefahren, so dass die Haltestifte im Formtisch 2 versenkt sind, so dass eine auf dem Formtisch 2 liegende Brezel 56 mittels der Förderriemen 3 und 4 zu dem Zwischentisch 12 weitergefördert werden kann. Vorzugsweise ist das Brezelwerkzeug 6 mit den Haltestiften 5 in Transportrichtung 35 in der zweiten Hälfte oder am Ende des Formtischs 2 angeordnet.

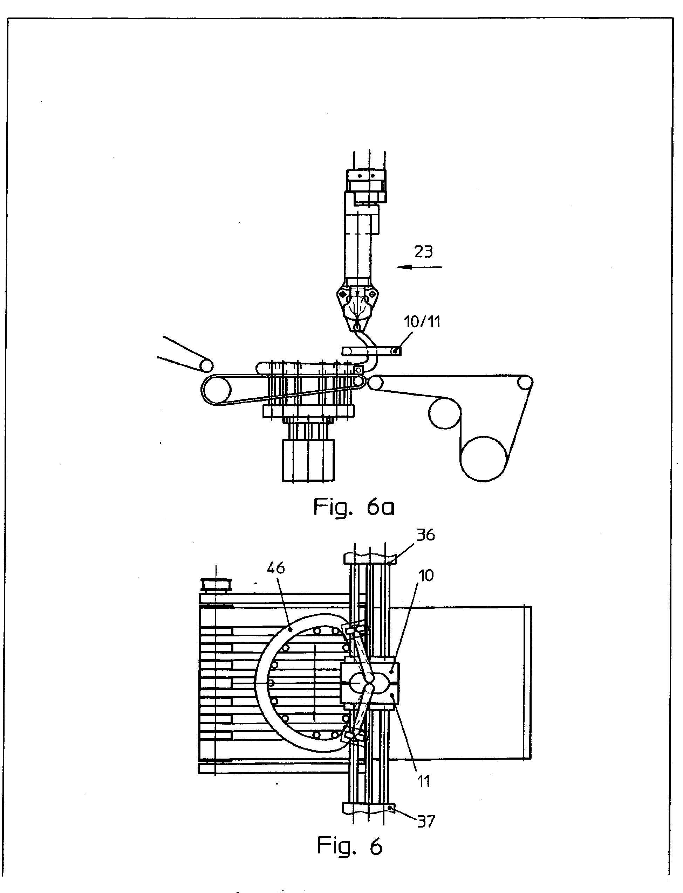

Oberhalb des Formtisches 2 befinden sich quer zur Transportrichtung 35 die Knoten-, Schling- und Führungsteile 10/11 (vgl. Fig. 2) verstellbar durch Hubzylinder 36/37, die im Zusammenhang mit Figur 6 näher erläutert werden.

Wie am besten aus der Figur 4 ersichtlich ist, sind seitlich des Formtisches 2 oberhalb der in Transportrichtung 35 hinteren Umlenkrolle der Förderriemen 3 und 4 auf jeder Seite des Formtisches 2 ein Sensor 38 bzw. 39 angebracht, die sich gegenüberstehen und deren Messrichtungen senkrecht zur Transportrichtung 35 ausgebildet sind. Die Sensoren 38 und 39 detektieren die Teigstrangenden des durch die Förderriemen 3 und 4 transportierten U-förmig gebogenen Teigstrangs 46, wobei die Detektion der Teigstrangenden insbesondere während des Transports des Teigstrangs 46 in Förderrichtung erfolgt. Sobald die Teigstrangenden an den Sensoren 38 und 39 vorbeilaufen werden Signale an die Steuerung gesendet, die das Ergreifen der Teigstrangenden durch die Schlingvorrichtung 8 ansteuert. Vorzugsweise werden die Teigstrangenden unabhängig voneinander detektiert, so dass auch unterschiedlich lange Teigstrangschenkel detektiert und von der Schlingvorrichtung 8 angepasst aufgenommen werden können.

Die Schlingvorrichtung 8 besteht im Wesentlichen aus einem Drehantrieb 25, der Drehführung 26 und dem Schlingkopf 9 und kann über einen karthesischen Roboter mit zwei linearen Freiheitsgraden bewegt werden. Der karthesische Roboter umfasst einen horizontalen Linearantrieb 15 und eine senkrecht dazu angeordnete vertikale weitere Linearachse.

Der Linearantrieb 15 ist ausgeführt als eine Führungsstange 19, die waagrecht parallel zur Transportrichtung 35 angeordnet und mit dem Grundgestell 59 fest verbunden ist, sowie zwei Führungswägen 18, die in die Führungsstange 19 eingehängt sind. Der Antrieb der Führungswägen 18 erfolgt mit einem Antriebsmotor 16, der über einen parallel zur Führungsstange 19 angeordneten Zahnriemen 17 und einem Verbindungsteil 22 die Führungswägen 18 bewegt. Der Antriebsmotor 16 ist ebenfalls fest mit dem Grundgestell 59 verbunden.

An den Führungswägen 18 ist ein Halteteil 21 aufgehängt, an dem die weitere Linearachse angebracht ist, die in vertikaler Richtung und senkrecht zu dem Linearantrieb 15 ausgerichtet und mit zwei in Reihe geschalteten Hubzylindern 27 und 28 realisiert ist. Durch die in Reihe geschalteten Hubzylinder 27 und 28 können vier verschiedene Höhenpositionen angefahren werden, soweit die Hubzylinder eine unterschiedliche Hubhöhe aufweisen. Sind die Hubzylinder 27 und 28 identisch ausgebildet, können nur drei verschiedene Höhenpositionen erreicht werden. Alternativ zu den Hubzylindern 27/28 könnte auch ein programmgesteuerter Stellantrieb eingesetzt werden, der am Halteteil 21 angebaut und über einen Zahnriemenantrieb mit der Drehführung 26 verbunden wäre. Somit könnte die Einsatzflexibilität noch erhöht werden, da jede Stellung im Verstellbereich der Laufrichtung 44/45 angefahren werden könnte.

Als weiteres Glied der kinematischen Kette ist der Drehantrieb 25 der Schlingvorrichtung 8 vorgesehen, der an der weiteren Linearachse angebracht ist und somit durch den Linearantrieb 15 und die weitere Linearachse bewegbar ist. Zusätzlich, insbesondere zur Erhöhung der Steifigkeit des Führungssystems, ist eine Vertikal-Führung 20 vorgesehen, die einerseits mit dem Halteteil 21 fest verbunden ist und andererseits den Drehantrieb 25 inklusive des mit dem Drehantrieb 25 geführten Schlingkopfs 9, also die gesamte Schlingvorrichtung 8 in vertikaler Richtung führt und stabilisiert. Die Drehachse 57 des Drehantriebs 25 ist vertikal und parallel zu der weiteren Linearachse ausgerichtet. Über den Drehantrieb 25, vorzugsweise ausgeführt als programmgesteuerter Servo- oder Schrittmotorantrieb, kann der Schlingkopf 9 um die vertikale Achse 57 um eine (360°), zwei (720°) oder mehrere Umdrehungen gedreht werden. Damit ist es nach dem vorgeschlagenen Verfahren möglich, Brezeln mit einem einfachen oder mehrfach geschlungenen Knoten herzustellen.

Insgesamt ist die Schlingvorrichtung 8 also über die Vertikal-Führung 20 und dem Halteteil 21, sowie dem Verbindungsteil 22 mit dem Zahnriemenantrieb 17 derart verbunden, so dass die Schlingvorrichtung 8 sich über den linearen Stellantrieb 15 und der Führung 18/19 und einer nicht dargestellten programmierbaren Steuerung sowohl in den Richtungen 23 und 24,also in und gegen die Transportrichtung 35, bewegen lässt.

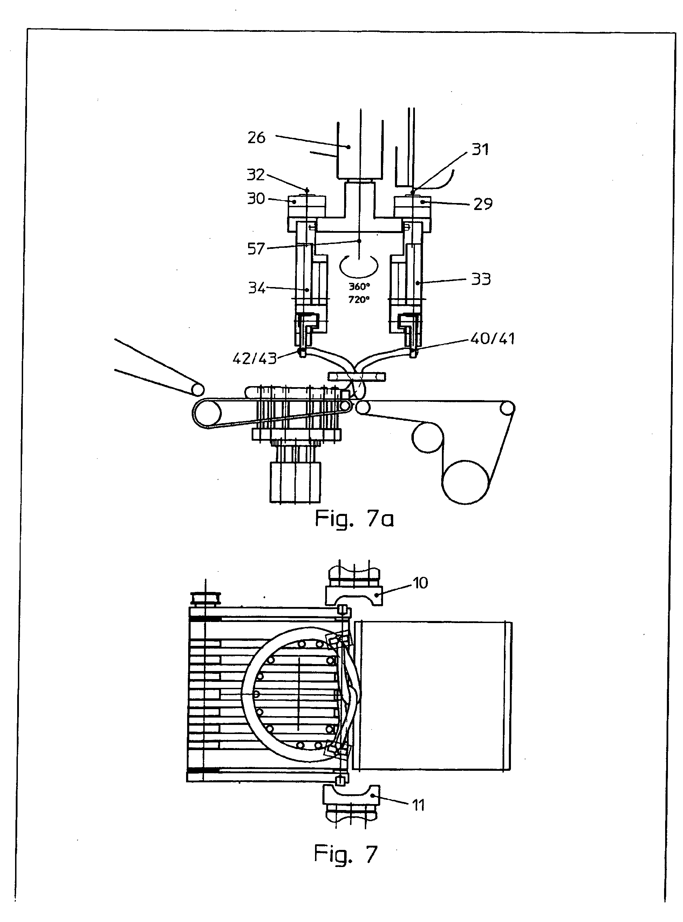

Der Schlingkopf 9 umfasst - wie am besten aus den Figuren 2 und 7a ersichtlich ist - am oberen Ende ein Joch 58, welches in der geschnittenen Seitenansicht der Figur 7a einen umgedreht T-förmigen Querschnitt aufweist. Der Mittelschenkel des im Querschnitt T-förmigen Jochs 58 bildet die Drehachse, um die der Schlingkopf 9 mittels des Drehantriebs rotiert werden kann und ist über eine Welle mit dem Drehantrieb verbunden. Die Drehachse des Jochs 58 entspricht dabei der vertikalen Drehachse 57. An den freien Enden des Jochs 58 sind Greifereinrichtungen 33 bzw. 34 angeordnet. Die Greifereinrichtung 33 bzw. 34 umfasst jeweils ein Paar Greiferfinger 40/41 und 42/43 zum Ergreifen und Halten der Teigstrangenden, wobei jedes Paar Greiferfinger exzentrisch auf einem Schwenkantrieb 29 bzw. 30 mit einer vertikalen Schwenkachse 31 bzw. 32 angeordnet ist. Diese Anordnung erlaubt, dass die gegriffenen Teigstrangenden jeweils um die vertikale Schwenkachse 31 bzw. 32 exzentrisch in einer horizontalen Bewegungsebene verschwenkt werden können. Damit ist es möglich, die Greifereinrichtung 33 beziehungsweise 34 von der Greifposition 48 quer zur Transportposition 35 gleich entsprechend der späteren Ablageposition 52 verstellen zu können.

Dem Formtisch 2 ist ein Zwischentisch 12 und ein Abführtisch 13 nachgeschaltet.

Der Formtisch 2 mit den Förderriemen 3 /4, das Brezelformwerkzeug 6 mit den Haltestiften 5 und dem Hubzylinder 7, die Schlingvorrichtung 8 mit den Dreh- bzw. Schlingkopf 9, sowie der Zwischentisch 12 mit dem Förderband 12a und der Abführtisch 13 mit dem Förderband 13a sind auch aus dem Patent EP 1255441 B1 bekannt.

Figur 4 zeigt eine Draufsicht auf den Formtisch 2 während ein U-förmig gebogener Teigstrang 46 auf dem Formtisch 2 mittels der Förderriemen 3 und 4 zum Bearbeitungsort transportiert wird. Das Brezelwerkzeug 6 mit den Haltestiften 5 ist durch das Ausfahren des Hubzylinders 7 in die oberster Stellung (Richtung 14a) gebracht, so dass die Haltestifte 5 eine Anlage für den Teigstrangmittelteil bilden.

Der Schlingkopf 9 befindet sich in der Greifposition, was bedeutet, dass die Greiffinger 40/41 bzw. 42/43 des Schlingkopfs 9 am Ende des Formtisches 2 in einem Zwischenbereich 47 zwischen Formtisch 2 und Zwischentisch 12 derart positioniert sind, dass der Greifbereich der Greiffinger 40/41 bzw. 42/43 in Verlängerung der Teigstrangschenkel des Teigstrangs 46 angeordnet sind. Die Schlingeinrichtung 8 mit dem Schlingkopf 9 befindet sich dabei in der Stellung 48 wie in Figur 3 dargestellt, wobei sich die Schlingvorrichtung 8 durch das Ausfahren der beiden Hubzylinder 27/28 in Richtung 45 in tiefster Stellung befindet.

Der von der Zuführeinrichtung 1 kommende U-förmige Teigstrang 46 (vgl. Fig. 1) wird mittels des Förderbandes 3/4 des Formtisches 2 verfahren, während die Sensoren 38/39 versuchen die Teigstrangenden 46a zu erkennen. Nachdem die Sensoren 38/39 die Teigstrangenden 46a erkannt haben, werden über eine nicht dargestellte Steuerung, die Greifer 40/41 des linken Greifers 33 zum Schließen, Greifen und Festhalten eines der Teigstrangenden 46a angesteuert (vgl. Fig 4a). Das Gleiche gilt für Sensor 39 mit der rechten Greifeinrichtung 34 (vgl. Fig. 4a). Somit können auch nicht deckungsgleiche gegenüberliegende Teigstrangenden 46a unabhängig und einzeln voneinander lagegenau gegriffen werden, trotz aufgrund Stauchungen entstehender Knicke in einzelnen Teigstrang-Schenkeln. Die Förderbänder 3 /4 des Formtisches 2 laufen dabei noch so lange weiter bis der Teigstrangmittelteil an den Haltestiften 5 des Brezelwerkzeugs 6 gemäß Figur 4a anliegt.

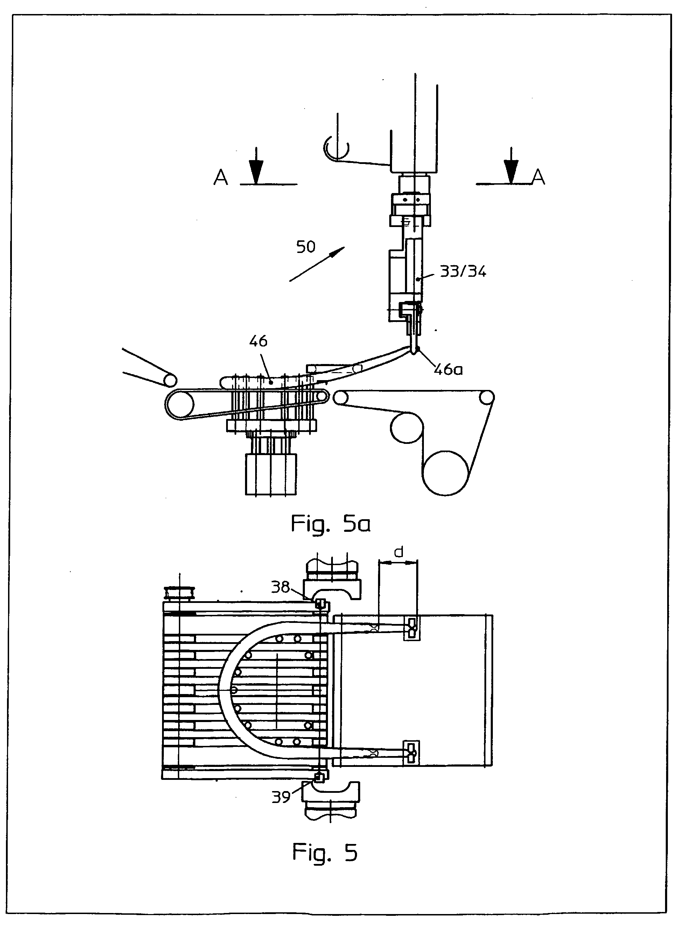

Figuren 5 und 5a illustrieren den Dehnungsschritt. Nach dem Greifen der Teigstrangenden 46a wird der U-förmige Teigstrang 46 sofort über das Verfahren der Schlingeinrichtung 8 über den linearen Stellantrieb 15 in Richtung 24 straff gezogen und gleichzeitig um ein Dehnungsmaß d gemäß Figur 5/5a gedehnt. Um Zeit zu sparen werden dabei die Bewegungsabläufe zum Teil überlagert ausgeführt. Dazu wird die Schlingeinrichtung 8 mit dem Schlingkopf 9 während des Verfahrens von der Greifstellung 48 (vgl. Fig. 3/5/5a) durch gleichzeitiges Ansteuern des Stellungsantriebes 15 in horizontaler Richtung 24 und der Hubzylinder 27/28 in vertikaler Richtung 44 in die Dehnstellung 49 gefahren. Die daraus resultierende Bewegungsrichtung 50 (s.Fig.3) vermeidet, dass es zwischen den Schenkeln des Teigstrangs 46 und den Förderbändern 3/4 sowie 12a zur Reibung kommt und damit eine gleichmäßige Dehnungskonstante in den Teigstrangschenkeln verhindert wird.

Figuren 6 und 6a zeigen die erste Phase des eigentlichen Schlingvorgangs. Durch horizontales Verfahren der Schlingeinrichtung 8 über den linearen Stellantrieb 15 nach links in Richtung 23 wird die Schlingeinrichtung 8 in die Brezelschlingstellung 51 (vgl. Fig. 3/6/6a) bewegt. Diese kann in der gleichen horizontalen Stellung wie die Greifstellung 48 liegen. Der Schlingprozess kann auch schon vor dem Erreichen der Brezelschlingstellung 51 eingeleitet werden. Während des Verstellens der Schlingeinrichtung 8 in Richtung 23 können gleichzeitig, insbesondere überlagert, über die nicht dargestellte Steuerung in Abhängigkeit des zurückgelegten Weges die folgenden Abläufe eingeleitet werden:

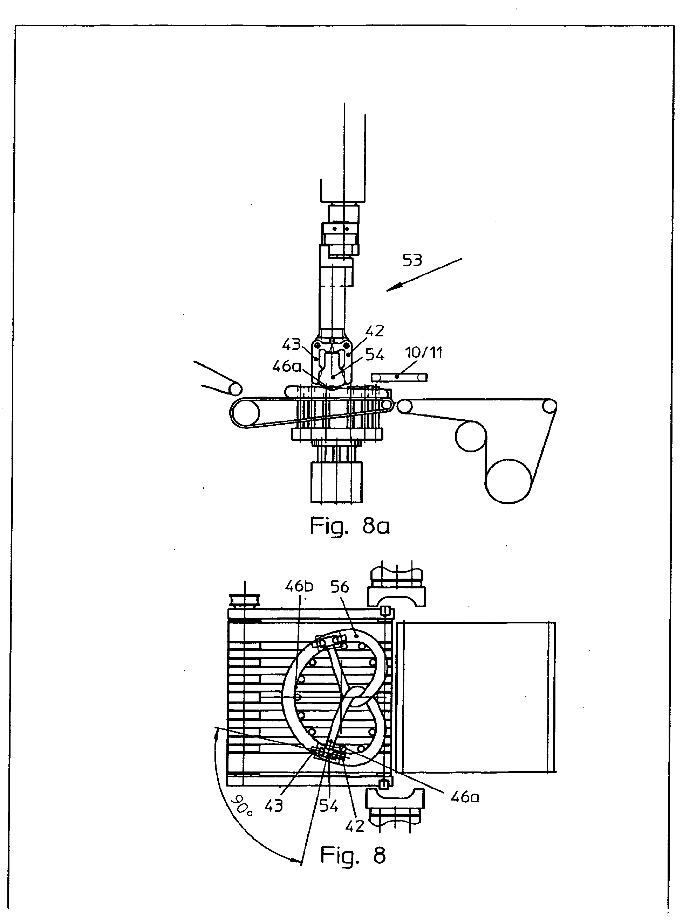

Über die vertikalen Drehachsen 31/32 werden die Greifeinrichtungen 33/34 in Schwenkrichtung 60/61 aufeinander zugeschwenkt (Fig. 2) bis die jeweiligen Teigstrangenden 46a einen ungefähren rechten Winkel mit der fertig geschlungenen Brezel bilden (Fig. 8). Dadurch wird die spätere Ablagestellung 52 vorbereitet.

Weiterhin wird durch das Ausfahren der Hubzylinder 36/37 und den Knotenschlingführungen 10/11 dem Teigstrang 46 die Form eines Omegas gegeben (Fig.6/6a). Die Knotenschlingführungen 10/11 sind als zwei Führungshalbschalen ausgebildet, so dass durch Ausfahren der Hubzylinder 36/37 die in ihrer Ruhestellung seitlich am Fromtisch 2 gegenüberstehend angeordneteten Knotenschlingführungen eine gemeinsame, geschlossene Schlingführung bilden, die in der Draufsicht im Querschnitt oval ausgebildet ist. Alternativ können die Führungshalbschalen als U-förmig offenes Führungsprofil gestaltet sein, wobei die Öffnung in Transportrichtung 35 zum Zwischentisch 12 weist. Die Unterseite der aus den Knotenschlingführungen gebildeten Schlingführung befindet sich ca. 2 bis 3 cm oberhalb des Fromtisches 2 und ist am Ende des Formtisches 2 mittig angeordnet. In einer Schlingführung mit derartigen Merkmalen lassen sich die Teigstrangschenkel vorteilhaft über eine in Transportrichtung 35 verlaufende Länge von etwa 2 bis 20 cm führen.

Die Figuren 7a und 7 zeigen die weiteren Schritte des eigentlichen Schlingvorgangs: Der Schlingkopf 9 wird über den Drehantrieb 25 um die vertikale Achse 57 zur Bildung des Knotens um eine (360°), zwei (720°) oder mehr Umdrehungen gedreht. Nach ungefähr drei Viertel des Drehwinkels des Schlingkopfes 9 können die Knoten- und Schlingführungen 10/11 über das Einfahren der Hubzylinder 36/37 geöffnet werden.

Gleichzeitig wird die Schlingeinrichtung 8 mit dem Schlingkopf 9 über den Stellantrieb 15 weiter in horizontaler Richtung 23 und durch das Ausfahren des Hubzylinders 28 in vertikaler Richtung 45 in die einstellbare Ablegestellung 52 (gem. Fig. 3/8/8a) angefahren. Dadurch entsteht die resultierende Bewegungsrichtung 53. Die Ablegestellung 52 dient zum Ablegen der Teigstrangenden 46a an der vorgegebenen Position der Brezel. Durch das Öffnen der Greifer 40/41 und 42/43 und dem gleichzeitigen Ausfahren des Andrückstößels 54 zwischen den Greifern werden die Brezelstrangenden 46a auf das Teigstrangmittelteil 46b angedrückt (siehe Fig. 8/8a). Der Brezelrohling 56 ist nun fertig gestellt.

Zum Weitertransport in Richtung 35 werden die Haltestifte 5 über den Hubzylinder 7 in vertikaler Richtung 14 aus dem Brezelrohling 56 herausgezogen. Gleichzeitig wird die Schlingeinrichtung 8 über den Stellantrieb 15 in Richtung 24 und durch das Einfahren des Hubzylinders 28 entgegen gesetzt zum Verstellweg 53 in Richtung 55 auf die Schlingstellung 51 zurück gefahren (siehe Fig. 3).

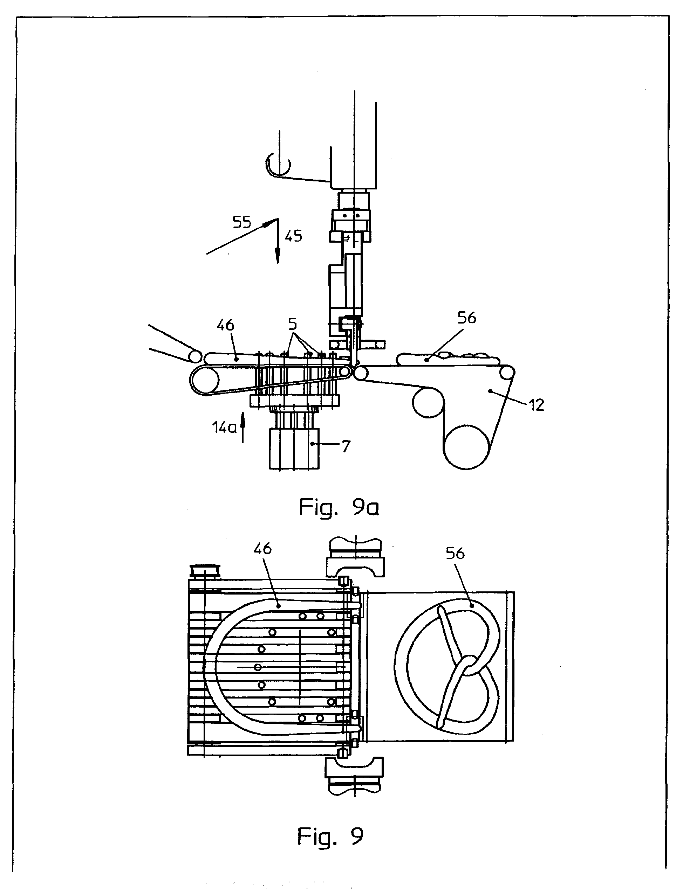

Mittels der Förderbänder 3/4/12a/13a wird der Brezelrohling 56 zur Weiterbehandlung auf den Abführtisch 13 befördert, Fig. 9/9a. Gleichzeitig wird ein Teigstrang 46 von der Zuführeinheit 1 auf den Formtisch 2 übernommen, gemäß Fig. 9/9a. Zur Aufnahme des nächsten bzw. neuen Brezelstranges 46 wird die Schlingeinrichtung 8 mit Schlingkopf 9 in die Greifstellung 48 und die Haltestifte 5 mit dem Brezelwerkzeug 6 in die oberste Position gefahren, siehe Fig. 9/9a.

In der Figur 3 ist der Bewegungsablauf des Schlingkopfs 9 übersichtsartig dargestellt: Während des Einfahrens des Teigstrangs 46 durch die Förderriemen 3 und 4 des Formtisches 2 befindet sich der Schlingkopf in der Position 48, so dass die Greiffinger 40/41 und 42/43 in dem Zwischenbereich 47 angeordnet sind. Die in Figur 3 gezeigten Positionen sind jeweils auf die durch die Schlingvorrichtung 8 gehaltenen Teigstrangenden bezogen. Durch eine überlagerte Bewegung des linearen Stellantriebs 15 und der weiteren Linearachse vorzugsweise bestehend aus den Hubzylindern 27/28 wird der Schlingkopf 9 in die Dehnungsposition 49 entlang der Richtung 50 gefahren. Nach dem Dehnungsschritt wird der Schlingkopf 8 vorzugsweise ausschließlich mittels des linearen Stellantriebs 15 in Richtung 23, die antiparallel zur Transportrichtung 35 ausgebildet ist, zur Schlingposition 51 gebracht. In der Schlingposition 51 und Greif- oder Aufnahmeposition 48 kann der Schlingkopf 8 die gleiche horizontale Lage einnehmen, mit anderen Worten, der Schlingkopf 8 könnte allein durch Verfahren der Hubzylinder 27 und/oder 28 von der Greifposition in die Schlingposition verfahren werden. Nach oder auch noch während dem Schlingvorgang wird der Schlingkopf 8 entlang der Richtung 53 in die Ablageposition 52 verfahren, die mittels der nicht dargestellten Steuerung einstellbar ist. Es kann insbesondere vorgesehen sein, dass die während des Dehnschritts im Teigstrang aufgebaute Spannung zumindest teilweise während des Schlingschritts aufrechtehalten wird, insbesondere solange die Schlingführungselemente zugeschaltet sind.

Die Vorteile der vorliegenden Erfindung, insbesondere des gezeigten Ausführungsbeispiels, können somit gegenüber dem Stand der Technik wie folgt sein:
1. Weniger Antriebs- und Steuerelemente und somit geringere Herstellungskosten für die Vorrichtung, geringerer Programmieraufwand, einfachere Bedienung und somit höhere Betriebszuverlässigkeit.
2. Weniger bewegbare Baugruppen und folglich ein geringerer Wartungsaufwand und höhere Betriebsverfügbarkeit.
3. Höhere Stundenleistung, schnellere Amortisierung und geringere Stückkosten.
4. Höhere Einsatzflexibilität, da unterschiedliche Brezelgrößen und andere Produkte (Zöpfe etc.) herstellbar sind.

### Bezugszeichenliste:

- 1: Zuführeinrichtung
- 2: Formtisch
- 3: Schmaler Förderriemen
- 4: Breiter Förderriemen
- 5: Haltestift
- 6: Brezelformwerkzeug
- 7: Hubzylinder für Brezelwerkzeug/Haltestifte
- 8: Schlingvorrichtung
- 9: Schlingkopf
- 10: Knoten-, Schling- und Führungsteil links
- 11: Knoten-, Schling- und Führungsteil rechts
- 12: Zwischentisch
- 12a: Förderband vom Zwischentisch
- 13: Abführtisch
- 13a: Förderband vom Abführtisch
- 14: Vertikal-Richtung nach unten für Haltestift
- 14a: Vertikal-Richtung nach oben für Haltestift
- 15: Linearer Stellantrieb
- 16: Antriebsmotor für linearen Stellantrieb
- 17: Zahnriemen für linearen Stellantrieb
- 18: Führungswagen
- 19: Führungsstange
- 20: Vertikal-Führung
- 21: Halteteil
- 22: Verbindungsteil zwischen Zahnriemen und Halteteil
- 23: Horizontale Richtung nach links
- 24: Horizontale Richtung nach rechts
- 25: Drehantrieb
- 26: Drehführung
- 27: Hubzylinder
- 28: Hubzylinder
- 29: Schwenkantrieb linke Greifeinrichtung
- 30: Schwenkantrieb rechte Greifeinrichtung
- 31: Vertikale Achse linke Greifeinrichtung
- 32: Vertikale Achse rechte Greifeinrichtung
- 33: Linke Greifeinrichtung
- 34: Rechte Greifeinrichtung
- 35: Transportrichtung
- 36: Hubzylinder linke Knotenführung
- 37: Hubzylinder rechte Knotenführung
- 38: Sensor für Teigstrangende links
- 39: Sensor für Teigstrangende rechts
- 40: Greiferfinger
- 41: Greiferfinger
- 42: Greiferfinger
- 43: Greiferfinger
- 44: Vertikal-Richtung nach oben
- 45: Vertikal-Richtung nach unten
- 46: Brezelteigstrang
- 46a: Teigstrangende
- 46b: Teigstrangmittelteil
- 47: Zwischen-Bereich
- 48: Greifstellung
- 49: Dehnstellung
- 50: Resultierende Richtung in Dehnstellung
- 51: Schlingstellung
- 52: Ablegestellung
- 53: Resultierende Richtung in Ablegestellung
- 54: Andrückstössel
- 55: Resultierende Richtung in Grundstellung
- 56: Brezelrohling
- 57: Vertikale Drehachse
- 58: Joch
- 59: Grundgestell
- 60: Schwenkrichtung/Greifeinrichtung links
- 61: Schwenkrichtung/Greifeinrichtung rechts
- d: Dehnmaß

## Patentansprüche

1. Verfahren zur maschinellen Herstellung von geschlungenen Teigrohlingen aus Teigsträngen, insbesondere von Brezelrohlingen,
wobei in einem ersten Schritt ein Teigstrang (46) an den Teigstrangenden (46a) von einem Schlingkopf (9) einer Teig-Schlingvorrichtung, der sich in einer Greifposition (48) befindet, aufgenommen wird,
wobei in einem zweiten Schritt der Teigstrang (46) in seiner Längsrichtung um ein Dehnungsmaß (d) gedehnt wird, womit der Dehnvorgang abgeschlossen ist, und dabei eine Steuerung vorgesehen ist, mit der das Dehnungsmaß (d) einstellbar ist,
wobei in einem dritten Schritt der Schlingkopf (9) in eine Schlingposition (51) verfahren und gedreht wird, wobei der Teigstrang (46) verschlungen wird, und
wobei in einem vierten Schritt der Schlingkopf (9) in eine Ablageposition (52) verfahren wird, in der die Teigstrangenden auf dem sonstigen Teigstrang abgelegt werden,
**dadurch gekennzeichnet, dass** im zweiten Schritt der Schlingkopf (9) mit den Teigstrangenden (46a) von der Greifposition (48) in horizontaler Richtung (24) und vertikaler Richtung (44) schräg nach oben in eine Dehnungsposition (49) verfahren wird, und der Teigstrang-Zwischenabschnitt zwischen den Teigstrangenden (46a) mittels eines stationären Anschlags (5,6) gehalten wird, und eine einstellbare Steuerung mit einem Stellantrieb (15) für den Schlingkopf (9) verwendet wird.

2. Verfahren nach Anspruch 1, **dadurch gekennzeichnet, dass** eine während des zweiten beziehungsweise Dehnungsschritts erzeugte Spannung in dem Teigstrang (46) während des dritten beziehungsweise Schlingschritts ganz oder teilweise, beispielsweise zumindest während der ersten dreiviertel Umdrehung des Schlingkopfs (9), aufrecht erhalten wird.

3. Verfahren nach Anspruch 2, **dadurch gekennzeichnet, dass** zur Spannungs-Aufrechterhaltung im dritten Schritt Knoten-Schlingführungsmittel (10,11) verwendet werden, die einen Führungsdurchgang bilden.

4. Verfahren nach Anspruch 1, 2 oder 3, **dadurch gekennzeichnet, dass** im zweiten beziehungsweise Dehnungs-Schritt der Schlingkopf (9) mit den Teigstrangenden (46a) in oder entsprechend einer Teigstrang-Förderrichtung (35) vom Anschlag (5,6) entfernt (50) wird.

5. Verfahren nach Anspruch 4, **dadurch gekennzeichnet, dass** im Zuge des Entfernens (50) dem Schlingkopf (9) eine Bewegungskomponente quer zur Teigstrang-Förderrichtung (35) überlagert wird.

6. Verfahren nach Anspruch 4 oder 5, **dadurch gekennzeichnet, dass** im dritten Schritt zum Erreichen der Schlingposition (51) der Schlingkopf (9) mit den Teigstrangenden (46a) entgegen der Teigstrang-Förderrichtung (35) verfahren (23) wird.

7. Verfahren nach einem der vorangehenden Ansprüche, **dadurch gekennzeichnet, dass** im vierten Schritt zum Erreichen der Ablageposition (52) der Schlingkopf (9) mit den Teigstrangenden (46a) entgegen der Teigstrang-Förderrichtung (35) verfahren (53) wird.

8. Verfahren nach Anspruch 7, **dadurch gekennzeichnet, dass** im Zuge des Erreichens (53) der Ablageposition (52) dem Schlingkopf (9) eine Bewegungskomponente quer zur Teigstrang-Förderrichtung (35) zur Annäherung an den Teigstrang-Zwischenabschnitt zwischen den Teigstrangenden (46a) überlagert wird.

9. Vorrichtung zur maschinellen Herstellung von geschlungenen Teigwaren, insbesondere Brezeln, zur Durchführung des Verfahrens nach einem der vorangehenden Ansprüche,
mit einem Formtisch (2) zur Auflage eines gebogenen Teigstrangs (46),
mit einem aktivierbaren Formwerkzeug (6) zur Anlage des gebogenen Teigstrangs (46) quer zur Auflagerichtung, wobei Formtisch (2) und aktiviertes Formwerkzeug (6) einen gemeinsamen Formanschlag für den gebogenen Teigstrang (46) bilden,
mit einem Schlingkopf (9) zum Ergreifen der Teigstrangenden und zum Schlingen des Teigstrangs (46),
**dadurch gekennzeichnet,**
**dass** der Schlingkopf (9) derart geführt und mit einem oder mehreren Stellantrieben (15;27,28) verbunden ist, dass der Schlingkopf (9) von einer Greifposition (48), in der die Teigstrangenden des gebogenen Teigstrangs (46) ergriffen werden, in horizontaler Richtung (24) und vertikaler Richtung (44) schräg nach oben zu einer Dehnungsposition (49) verfahrbar ist, in der der Teigstrang (46) in Verbindung mit dem gemeinsamen Formanschlag dehnbar ist, womit der Dehnvorgang abgeschlossen ist, und
**dass** der gemeinsame Formanschlag gegenüber einer Teigstrang-Förderrichtung (35) stationär beziehungsweise feststehend ausgebildet ist, und dass
der Schlingkopf (9) von der Greifposition (48) in eine Dehnungsposition (49) verfahrbar ist, wobei eine Steuerung vorgesehen ist, mit der das Dehnungsmaß (d) einstellbar ist.

10. Vorrichtung nach Anspruch 9, **dadurch gekennzeichnet, dass** der schaltungs- oder programmtechnisch für die variabel voreinstellbare Dehnungsposition (49) eingerichtete Stellantrieb (15) parallel zur Förderrichtung (35) geführt und/oder mit einem elektrischen Servo- oder Schrittmotor (16) ausgeführt ist.

11. Vorrichtung nach Anspruch 10, **dadurch gekennzeichnet, dass** der Stellantrieb (15) eine mit dem Servo- oder Schrittmotor (16) gekoppelte (17,22) Linearführung (18,19) aufweiset, die sich parallel zur Teigstrang-Förderrichtung (35) und über einen in die Förderrichtung (35) weisenden Ausgang des Formtisches (2) hinaus erstreckt.

12. Vorrichtung nach einem der Ansprüche 9-11, **dadurch gekennzeichnet, dass** der Schlingkopf (9) derart geführt und mit dem oder den Stellantrieben (15) verbunden ist, dass der Schlingkopf (9) von der Dehnungsposition zu einer Schlingposition (51) verfahrbar (23) ist, in der der Teigstrang verschlingbar ist.

13. Vorrichtung nach Anspruch 12, **dadurch gekennzeichnet, dass** der Schlingkopf (9) derart geführt und mit dem oder den Stellantrieben (15,28) verbunden ist, dass der Schlingkopf (9) von der Schlingposition (51) zu einer Ablageposition (52) verfahrbar (53) ist, in der die Teigstrangenden auf dem Teigstrang-Zwischenabschnitt ablegbar sind.

14. Vorrichtung nach einem der Ansprüche 9-13, **dadurch gekennzeichnet, dass** das Formwerkzeug (6), insbesondere mit Stiften (5) und/oder sonstigen Haltekörpern, in und/oder entgegen der Teigstrangförderrichtung (35) feststehend und ausschließlich in einer Richtung (44,45) quer oder schräg dazu verfahrbar ist.

15. Vorrichtung nach einem der Ansprüche 9-14, **dadurch gekennzeichnet, dass** zwei Sensoren (38, 39) seitlich am Formtisch (2) diametral zueinander oder sonst gegenüberliegend angeordnet sind, so dass eine Messlinie und/oder eine Messebene zumindest abschnittsweise parallel zum Formtisch (2) und quer oder schräg zur Teigstrang-Förderrichtung (35) gebildet ist, wobei die Sensoren (38, 39) in Förderrichtung (35) im Ausgangsbereich oder in der letzten Hälfte des Formtischs (2) angeordnet sind.

16. Vorrichtung nach einem der Ansprüche 9-15, wobei die Stellantriebe (15,16;25;27,28) des Schlingkopfs (9) einen Drehantrieb (25) umfassen, **dadurch gekennzeichnet, dass** der Drehantrieb (25) programmgesteuert mit einem Servo- oder Schrittmotor ausgeführt ist.

17. Vorrichtung nach einem der Ansprüche 9-16, wobei die Stellantriebe (15,16,17;25;27,28) des Schlingkopfs (9) einen Drehantrieb (25) umfassen, **dadurch gekennzeichnet, dass** dessen Drehachse (57) als Endlos-Drehachse ausgebildet ist und eine Drehung des Schlingkopfs (9) um 360° und/oder 720° und/oder um mehrere Umdrehungen ermöglicht, wobei eine Drehdurchführung zur Durchführung der Steuersignale und der Versorgungsströme für den Schlingkopf und/oder dessen Drehantrieb (25) vorgesehen ist.

18. Vorrichtung nach einem der Ansprüche 9-17, **dadurch gekennzeichnet, dass** der oder die Stellantriebe (15,16;25;27,28) mit einer Steuerung verbunden sind, die schaltungs- und/oder programmtechnisch derart ausgebildet ist, dass Parametersätze speicherbar und/oder abrufbar sind, die die Anzahl der Drehungen eines Drehantriebs (25) für den Schlingkopf (9) und/oder das Dehnungsmaß (d) und/oder die Koordinaten einer Greif-, Dehnungs-, Schling- und/oder Ablageposition für den Stellantrieb (15) und gegebenenfalls sonstige Antriebe des Schlingkopfes (9) umfassen.

19. Vorrichtung nach Anspruch 18, **dadurch gekennzeichnet, dass** die Steuerung schaltungs- und/oder programmtechnisch derart ausgebildet ist, dass alle oder ein Teil der genannten Steuer-Parametersätze über einen Teigwarendatenschlüssel referenziert sind.

## Claims

1. Method for the mechanised manufacture of tied dough blanks comprising dough strands, in particular pretzel blanks, wherein in a first step a dough strand (46) is received by the dough strand ends (46a) by a tying head (9) of a dough-tying device, which is in a gripping position (48), wherein in a second step the dough strand (46) is stretched in its longitudinal direction by a degree of stretch (d), whereby the stretching process is completed, and thereby a control is provided with which the degree of stretch (d) may be preset in a variable manner, wherein in a third step the tying head (9) is moved into a tying position (51) and is rotated, the dough strand (46) being tied, and wherein in a fourth step the tying head (9) is moved into a depositing position (52) in which the dough strand ends are deposited on the rest of the dough strand,
**characterised in that**
in the second step the tying head (9) with the dough strand ends (46a) is moved from the gripping position (48) in a horizontal direction (24) and a vertical direction (44) obliquely upwards into a stretching position (49) and the dough strand intermediate section between the dough strand ends (46a) is held by means of a stationary stop (5, 6) and a control which may be set is used with an actuator (15) for the tying head (9).

2. Method according to claim 1, **characterised in that** a tension generated during the second or stretching step is maintained in the dough strand (46) during the third or tying step wholly or in part, e.g. at least during the first three quarter turn of the tying head (9).

3. Method according to claim 2, **characterised in that** in order to maintain this tension in the third step, knot-tying guide means (10, 11) are used, which form a guide passage.

4. Method according to claim 1, 2 or 3, **characterised in that** in the second or stretching step, the tying head (9) with the dough strand ends (46a) is removed (50) from the stop (5, 6) in or according to a dough strand conveying direction (35).

5. Method according to claim 4, **characterised in that** in the course of removal (50), a component of motion transverse to the dough strand conveying direction (35) is superimposed on the tying head (9).

6. Method according to claim 4 or 5, **characterised in that** in the third step, in order to reach the tying position (51), the tying head (9) is moved (23) with the dough strand ends (46a) counter to the dough strand conveying direction (35).

7. Method according to any of the preceding claims, **characterised in that** in the fourth step, in order to reach the depositing position (52), the tying head (9) with the dough strand ends (46a) is moved (53) counter to the dough strand conveying direction (35).

8. Method according to claim 7, **characterised in that** in the course of reaching (53) the depositing position (52) a component of motion transverse to the dough strand conveying direction (35) is superimposed on the tying head (9) in order to approach the dough strand intermediate section between the dough strand ends (46a).

9. Apparatus for the mechanised manufacture of tied dough products, in particular pretzels, for carrying out the method according to one of the preceding claims,
with a shaping table (2) for the support of a curved dough strand (46),
with an activatable shaping tool (6) for the abutment of the curved dough strand (46) transverse to the support direction, wherein the shaping table (2) and the activated shaping tool (6) form a common shaping stop for the curved dough strand (46),
with a tying head (9) for grasping the dough strand ends and tying the dough strand (46),
**characterised in that**
the tying head (9) is so guided and connected to one or more actuators (15; 27, 28) that the tying head (9) is movable from a gripping position (48) in which the dough strand ends of the curved dough strand (46) are grasped, in a horizontal direction (24) and a vertical direction (44) obliquely upwards to a stretching position (49) in which the dough strand (46) is stretchable in combination with the common shaping stop, wherein the stretching process is completed, and
the common shaping stop is formed stationary or fixed towards a dough strand conveying direction (35), and
the tying head (9) is movable from the gripping position (48) to the stretching position (49), wherein a control is provided with which the degree of stretch (d) may be preset.

10. Apparatus according to claim 9, **characterised in that** the actuator (15) arranged by circuit or programming technology for presetting the stretching position (49) in a variable manner is guided parallel to the conveying direction (35) and/or is formed with an electric servo or stepper motor (16).

11. Apparatus according to claim 10, **characterised in that** the actuator (15) has a linear guide (18, 19) which is coupled (17, 22) to the servo or stepper motor (16) and which extends parallel to the dough strand conveying direction (35) and beyond an outlet of the shaping table (2) facing in the conveying direction (35).

12. Apparatus according to any of the claims 9 - 11, **characterised in that** the tying head (9) is so guided and connected to one or more actuators (15) that the tying head (9) is movable (23) from the stretching position to a tying position (51) in which the dough strand (46) is tyable.

13. Apparatus according to claim 12, **characterised in that** the tying head (9) is so guided and connected to one or more actuators (15, 28) that the tying head (9) may be moved (53) from the tying position (51) into a depositing position (52) in which the dough strand ends may be deposited on the dough strand intermediate section.

14. Apparatus according to any of the claims 9 - 13, **characterised in that** the shaping tool (6), in particular with pins (5) and/or other holding bodies, may be moved steadily in and/or counter to the dough strand conveying direction (35) and only in one direction (44, 45) transverse or oblique thereto.

15. Apparatus according to any of the claims 9 - 14, **characterised in that** two sensors (38, 39) are disposed at the sides of the shaping table (2) diametrically opposed or otherwise opposite one another, so that a measuring line and/or a measuring plane is formed at least in parts parallel to the shaping table (2) and transverse or oblique to the dough strand conveying direction (35), the sensors (38, 39) being disposed in the starting region or in the last half of the shaping table (2) in the conveying direction (35).

16. Apparatus according to any of the claims 9 - 15, wherein the actuators (15, 16; 25; 27, 28) of the tying head (9) comprise a rotary drive (25), **characterised in that** the rotary drive (25) is formed to be programme-controlled with a servo or stepper motor.

17. Apparatus according to any of the claims 9 - 6, wherein the actuators (15, 16, 17; 25; 27, 28) of the tying head (9) comprise a rotary drive (25), **characterised in that** its axis of rotation (57) is formed as an endless rotary axis and permits rotation of the tying head (9) through 360° and/or 720° and/or through plural revolutions, a rotary duct being provided for passing through the control signals and supply currents for the tying head and/or its rotary drive (25).

18. Apparatus according to any of the claims 9 - 17, **characterised in that** the one or more actuators (15, 16; 25; 27, 28) are connected to a control which is so arranged in terms of circuit and/or programme technology that sets of parameters may be stored and/or retrieved, which comprise the number of rotations of a rotary drive (25) for the tying head (9) and/or the degree of stretch (d) and/or the coordinates of a gripping, stretching, tying and/or depositing position for the actuator (15) and optionally other drives of the tying head (9).

19. Apparatus according to claim 18, **characterised in that** the control is so formed in terms of circuit and/or programme technology that all or some of the control parameter sets mentioned are referenced via a dough product data key.

## Revendications

1. Procédé de fabrication mécanisée d'ébauches de pâte enroulées, faites de boudins de pâte, en particulier d'ébauches de bretzels, dans lequel,
dans une première étape, un boudin de pâte (46) est saisi à ses extrémités (46a) par une tête d'enroulement (9) d'un dispositif d'enroulement de pâte qui se trouve dans une position de saisie (48),
dans une deuxième étape, le boudin de pâte (46) est étiré selon un certain degré d'étirage (d) dans le sens longitudinal, après quoi l'opération d'étirage est terminée, une commande de réglage du degré d'étirage (d) étant prévue,
dans une troisième étape, la tête d'enroulement (9) est amenée dans une position d'enroulement (51) et tournée, le boudin de pâte (46) étant alors torsadé, et
dans une quatrième étape, la tête d'enroulement (9) est amenée dans une position de dépose (52), dans laquelle les extrémités du boudin de pâte sont déposées sur le reste du boudin de pâte,
**caractérisé en ce que**, dans la deuxième étape, la tête d'enroulement (9), avec les extrémités (46a) du boudin de pâte, est déplacée obliquement vers le haut, dans la direction horizontale (24) et dans la direction verticale (44), de la position de saisie (48) à une position d'étirage (49) et le segment intermédiaire du boudin de pâte compris entre les extrémités (46a) du boudin de pâte est retenu au moyen d'une butée fixe (5, 6), et une commande réglable dotée d'un actionneur (16) est utilisée pour la tête d'enroulement (9).

2. Procédé selon la revendication 1, **caractérisé en ce qu'**une tension produite dans le boudin de pâte (46) au cours de la deuxième étape d'étirage, selon le cas, est maintenue entièrement ou partiellement pendant la troisième étape d'enroulement, selon le cas, par exemple au moins pendant les trois premiers quarts de tour de la tête d'enroulement (9).

3. Procédé selon la revendication 2, **caractérisé en ce que**, pour le maintien de la tension dans la troisième étape, on utilise des moyens de guidage d'enroulement en noeud (10, 11) qui forment un passage de guidage.

4. Procédé selon la revendication 1, 2 ou 3, **caractérisé en ce que**, dans la deuxième étape d'étirage, selon le cas, la tête d'enroulement (9), avec les extrémités du boudin de pâte (46a), est éloignée (50) de la butée (5, 6) dans, ou à peu près dans, la direction de transport (35) du boudin de pâte.

5. Procédé selon la revendication 4, **caractérisé en ce que**, durant le mouvement d'éloignement (50), une composante de mouvement est superposée à la tête d'enroulement (9) transversalement à la direction de transport (35) du boudin de pâte.

6. Procédé selon la revendication 4 ou 5, **caractérisé en ce que**, dans la troisième étape qui vise la position d'enroulement (51), la tête d'enroulement (9) est déplacée (23) avec les extrémités du boudin de pâte (46a) inversement à la direction de transport (35) du boudin de pâte.

7. Procédé selon l'une des revendications précédentes, **caractérisé en ce que**, dans la quatrième étape visant la position de dépose (52), la tête d'enroulement (9) est déplacée (53) avec les extrémités du boudin de pâte (46a) inversement à la direction de transport (35) du boudin de pâte.

8. Procédé selon la revendication 7, **caractérisé en ce que**, durant le mouvement (53) visant la position de dépose (52), une composante de mouvement est superposée à la tête d'enroulement (9) transversalement à la direction de transport (35) du boudin de pâte, pour la rapprocher du segment intermédiaire du boudin de pâte compris entre les extrémités (46a) du boudin de pâte.

9. Dispositif pour la fabrication mécanisée de produits en pâte enroulés, en particulier de bretzels, pour la mise en oeuvre du procédé selon l'une des revendications précédentes, comprenant une table de formage (2) pour la dépose d'un boudin de pâte recourbé (46), un outil de formage (6) pouvant être activé, destiné à disposer le boudin de pâte (46) recourbé, transversalement à la direction de dépose, la table de formage (2) et l'outil de formage (6) activé formant une butée de formage commune pour le boudin de pâte recourbé (46),
une tête d'enroulement (9) destinée à saisir les extrémités du boudin de pâte et à enrouler le boudin de pâte (46),
**caractérisé**
**en ce que** la tête d'enroulement (9) est guidée, et reliée à un ou plusieurs actionneurs (15 ; 27, 28), de telle sorte que la tête d'enroulement (9) peut être déplacée obliquement vers le haut, dans la direction horizontale (24) et dans la direction verticale (44), d'une position de saisie (48), dans laquelle les extrémités du boudin de pâte recourbé (46) sont saisies, à une position d'étirage (49), dans laquelle le boudin de pâte (46), associé à la butée de formage commune, peut être étiré, ce qui termine l'opération d'étirage, et
**en ce que** la butée de formage commune est de conception stationnaire relativement à une direction de transport (35) du boudin de pâte, ou fixe,
et **en ce que** la tête d'enroulement (9) peut être déplacée de la position de saisie (48) à une position d'étirage (49), une commande de réglage du degré d'étirage (d) étant prévue.

10. Dispositif selon la revendication 9, **caractérisé en ce que** l'actionneur (15) pour la position d'étirage préréglable de façon variable (49), conçu en technique de câblage ou de programme, est guidé parallèlement à la direction de transport (35) et/ou réalisé avec un servomoteur électrique ou un moteur pas-à-pas (16).

11. Dispositif selon la revendication 10, **caractérisé en ce que** l'actionneur (15) présente un guidage linéaire (18, 19) accouplé (17, 22) au servomoteur ou au moteur pas-à-pas (16) et qui s'étend parallèlement à la direction de transport (35) du boudin de pâte et se prolonge au-delà d'une sortie de la table de formage (2) orientée dans la direction de transport (35).

12. Dispositif selon l'une des revendications 9 à 11, **caractérisé en ce que** la tête d'enroulement (9) est guidée, et reliée à l'actionneur ou aux actionneurs (15), de telle sorte que la tête d'enroulement (9) peut être déplacée (23) de la position d'étirage à une position d'enroulement (51), dans laquelle le boudin de pâte peut être enroulé.

13. Dispositif selon la revendication 12, **caractérisé en ce que** la tête d'enroulement (9) est guidée, et reliée à l'actionneur ou aux actionneurs (15, 28), de telle sorte que la tête d'enroulement (9) peut être déplacée (53) de la position d'enroulement (51) à une position de dépose (52), dans laquelle les extrémités du boudin de pâte peuvent être déposées sur le segment intermédiaire du boudin de pâte.

14. Dispositif selon l'une des revendications 9 à 13, **caractérisé en ce que** l'outil de formage (6) est immobilisé, en particulier au moyen d'ergots (5) et/ou d'autres organes de retenue, dans la direction de transport (35) du boudin de pâte et/ou en sens inverse, et peut se déplacer exclusivement dans une direction (44, 45) transversale ou oblique à cette direction.

15. Dispositif selon l'une des revendications 9 à 14, **caractérisé en ce que** deux capteurs (38, 39) sont disposés latéralement à la table de formage (2), opposés diamétralement l'un à l'autre, ou autrement face à face, de telle sorte qu'il se forme une ligne de mesure et/ou un plan de mesure au moins par endroits parallèlement à la table de formage (2) et transversalement ou obliquement à la direction de transport (35) du boudin de pâte, les capteurs (38, 39) étant disposés, dans la direction de transport (35), dans la région de sortie ou dans la dernière moitié de la table de formage (2).

16. Dispositif selon l'une des revendications 9 à 15, dans lequel les actionneurs (15, 16 ; 25 ; 27, 28) de la tête d'enroulement (9) comprennent un entraînement de rotation (25), **caractérisé en ce que** l'entraînement de rotation (25) est exécuté par un servomoteur ou un moteur pas-à-pas via une commande programmable.

17. Dispositif selon l'une des revendications 9 à 16, dans lequel les actionneurs (15, 16, 17 ; 25 ; 27, 28) de la tête d'enroulement (9) comprennent un entraînement de rotation (25), **caractérisé en ce que** l'axe de rotation (57) de cet entraînement se présente sous forme d'un axe de rotation sans fin et permet de faire tourner la tête d'enroulement (9) de 360° et/ou de 720° et/ou de lui faire exécuter plusieurs rotations, et où il est prévu une traversée tournante pour le passage des signaux de commande et des courants d'alimentation pour la tête d'enroulement et/ou l'entraînement de rotation (25) de cette dernière.

18. Dispositif selon l'une des revendications 9 à 17, **caractérisé en ce que** l'actionneur ou les actionneurs (15, 16 ; 23 ; 27, 28) est ou sont relié(s) à une commande conçue, en technique de câblage et/ou de programme, de telle sorte qu'il soit possible de mémoriser et/ou de sélectionner des jeux de paramètres qui comprennent le nombre de rotations d'un entraînement de rotation (25) de la tête d'enroulement (9) et/ou le degré d'étirage (d) et/ou les coordonnées d'une position de saisie, d'étirage, d'enroulement et/ou de dépose pour l'actionneur (15) et pour les autres entraînements éventuels de la tête d'enroulement (9).

19. Dispositif selon la revendication 18, **caractérisé en ce que** la commande est conçue, en technique de câblage et/ou de programme, de telle sorte que tout ou partie des jeux de paramètres de commande précités soit référencé(e) par l'intermédiaire d'une clé de données de produits en pâte.
